Europäisches Patentamt

European Patent Office

Office européen des brevets

(19)

(11) Publication number: **0 141 753 B1**

(12) EUROPEAN PATENT SPECIFICATION

(45) Date of publication of patent specification: **29.04.92**    (51) Int. Cl.⁵: **G06F 13/28**, G06F 5/00

(21) Application number: **84402214.5**

(22) Date of filing: **05.11.84**

(54) Adjustable buffer for data communications in data processing system.

(30) Priority: **07.11.83 US 549609**

(43) Date of publication of application:
**15.05.85 Bulletin 85/20**

(45) Publication of the grant of the patent:
**29.04.92 Bulletin 92/18**

(84) Designated Contracting States:
**BE CH DE FR GB IT LI NL SE**

(56) References cited:
**US-A- 4 156 288**
**US-A- 4 236 225**
**US-A- 4 314 361**

**ELECTRONIC DESIGN, vol. 29, no. 24, November 1981, pages 205-214, Waseca, MN, US; A. WEISSBERGER: "FIFOs eliminate the delay when data rates differ"**

(73) Proprietor: **DIGITAL EOUIPMENT CORPORATION**
**146 Main Street**
**Maynard, MA 01754(US)**

(72) Inventor: **Altman, Barbara H.**
**29 Bennett Street**
**Hudson Massachusetts 01749(US)**
Inventor: **Bruckert, William F.**
**16 Edith Road**
**Hudson Massachusetts 01749(US)**
Inventor: **Dellicicchi, Alfred J.**
**28 Simon Willard Road**
**Acton Massachusetts 01720(US)**

(74) Representative: **Mongrédien, André et al**
**c/o SOCIETE DE PROTECTION DES INVENTIONS 25, rue de Ponthieu**
**F-75008 Paris(FR)**

## Description

The invention relates generally to digital data processing systems, and more specifically to buffering systems for use in such data processing systems. More specifically, the invention provides a first in-first out buffer of adjustable size, or adjustable numbers of storage locations. This can facilitate the transfer of data between two elements through the buffer since, if the number of data words being transferred is less than the number of locations in the entire buffer, the number of locations in the buffer can be reduced so as to allow the first-loaded data word, after all of the data words have been fully loaded into the buffer, to be at the output end of the buffer and available to be transmitted to the receiving module. The invention thus ensures that time is not spent stepping the data words through the storage locations in the buffer after they have been loaded before the data is sent to the receiving module.

Description of the Prior Art

A digital data processing system generally includes three basic elements; namely, a memory element, an input/output element, and a processor element, all interconnected by one or more busses. The memory element stores data in addressable storage locations. This data includes both operands and instructions for processing the operands. The processor element causes data to be transferred or fetched, to it from the memory element, interprets the incoming data as either instructions or operands, and processes the operands in accordance with the instruction. The results are then stored in addressed locations in the memory element. An input/output element also communicates with the memory element in order to transfer data into the system and to obtain the processed data from it. The input/output elements normally operate in accordance with control information supplied to it by the processor element. The input/output elements may include, for example, printers, teletypewriters or keyboards and video display terminals, and may also include secondary data storage devices such as disk drives or tape drives.

It is common in data processing systems to use buffers to synchronize communications among the various elements forming the data processing system. These buffers can be "stacks", or last-in-first-out (LIFO) buffers, in which a receiving module retrieves data words in the reverse order in which they are loaded by a transmitting module. Alternatively, the buffers can be first-in-first-out (FIFO) storage elements in which a receiving module receives data words in the order in which they are loaded by a transmitting module. In some cases, buffers have the capacity for storing only a single data words. In that case the LIFO and FIFO buffers are effectively the same. In other cases, the buffers may have several storage locations each of which can store a data word. The capacity of a buffer is selected by a designer based on a number of factors, including the speeds of the modules in transmitting and receiving data and the amount of data that is expected to be transferred between the two modules.

In a data transfer through a multiple-location FIFO buffer, data words are typically serially loaded into an input end, shifted through all of the storage locations in the buffer, and transmitted from an output end. If a transfer is of sufficient data words to use up all of the locations in the buffer, the data for the receiving module is at the output end of the buffer when all of the data have been loaded. However, if the transfer is not of sufficient data words to occupy all of the locations in the buffer, the receiving module will have to enable the buffer control to shift the data words through the buffer to the output end before it can begin receiving them.

A stack or LIFO buffer, on the other hand, does not have this problem. In a stack buffer, the output end and the input end are the same; data words do not have to be shifted through the buffer to reach the output end. However, two problems arise from the use of a stack buffer in some circumstances. First, the order of the data words received by a module from a stack buffer is reversed from the order in which they are loaded into the buffer. If the order is important to the receiving module, it will have to be designed with that buffering limitation in mind. Second, since the input and output ends are the same, only one module, the transmitting or receiving module, can use the stack buffer at a time, either to load or receive data. With a FIFO buffer, this limitation does not exist; the transmitting module can load data into the input end of a FIFO buffer at the same time that the receiving module is receiving data therefrom.

We can also report prior art constituted by the article "Electronic Design", vol. 29 (1981), November 26, No 24, pages 205-214 of Weissberger.

This article relates to first-in, first-out buffers to permit information to be written at one rate, and read out at a different rate. The FIFO provides two control lines to the system to indicate when it becomes empty or full. Input and output operations are independent, except when the FIFO is full or empty.

Present invention is such as claimed in claim 1 and in claim 2.

The invention provides a new and improved first-in-first-out, or FIFO, buffer for buffering data transfers from a transmitting unit to a receiving unit, which enables the receiving unit to be able to immediately withdraw data words from the buffer without having to step them through any empty locations to the output end of the buffer. The data words are transferred by the transmitting unit in a block of one of several selected sizes, and the transmitting unit transmits a signal along with the data which identifies the number of data words in the block being transferred. A buffer control circuit receives the block size identification signal and determines the number of storage locations needed in the buffer to store all of the data words in the block. The buffer control circuit enables the data words to be loaded into the buffer starting at a storage location a selected number of storage locations from the output end, the number of locations equalling the number of data words in the block. Thus, when the receiving unit desires to receive the data, the first data word is at the output end of the buffer; the receiving module does not need to shift data words through the buffer to make them available to it at the output end.

Brief Description of the Drawings

The invention is pointed out with particularity in the appended claims. The above and further objects and advantages of the invention may be better understood by referring to the following description taken in conjunction with the accompanying drawings in which:

FIG. 1 is a general block diagram of a digital data processing system incorporating a buffer constructed in accordance with the invention;

FIG. 2 is a block diagram of a memory controller included in the data processing system depicted in FIG. 1, and which is useful in an understanding of the invention;

FIG. 3 is a block diagram of a memory array which is used with the memory controller depicted in FIG. 2 and which includes a buffer constructed in accordance with the invention;

FIG. 4 is a circuit diagram of a data buffer according to the invention useful in the array depicted in FIG. 3;

FIG. 5 depicts an alternate embodiment of the data buffer depicted in FIG. 4 ; and fig 6 is a circuit diagram of another data buffer constructed in accordance with the invention.

Description of the Preferred Embodiments

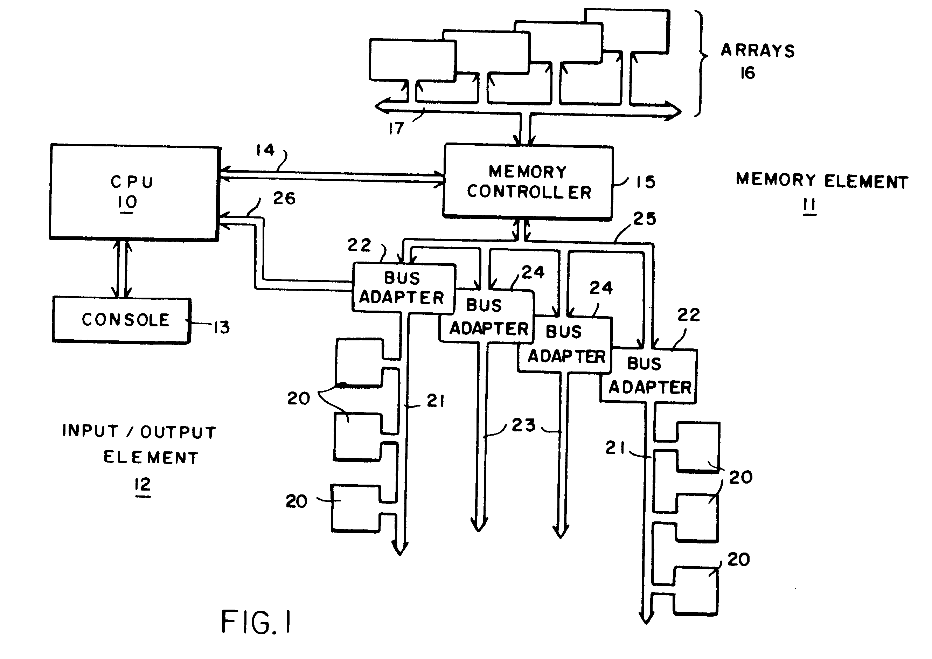

As exemplified in FIG. 1, the basic elements of a data processing system including the invention comprise a central processor unit (processor) 10, a memory unit 11, and an input/output element 12. The processor 10 executes instructions that are stored in addressable storage locations in the memory unit 11. The instructions identify operations that are to be performed on operands, which are also stored in addressable locations in the memory unit. The instructions and operands are fetched by the processor 10 as they are needed, and processed data are returned to the memory unit. The processor 10 also transmits control information to units in the input/output element, enabling them to perform selected operations, such as transmitting data to or retrieving data from the memory unit 11. Such data may be instructions, operands which may be transmitted to the memory unit or processed data which is retrieved from the memory for storage or display.

An operator's console 13 serves as the operator's interface. It allows the operator to examine and deposit data, halt the operation of the central processor unit 10, or step the central processor unit through a sequence of instructions and determine the responses of the processor in response thereto. It also enables an operator to initialize the system through a boot strap procedure, and perform various diagnostic tests on the entire data processing system.

The central processor unit 10 is connected to the memory unit 11 through several buses generally identified by the reference numeral 14. Specifically, the central processor unit 10 is directly connected to a memory controller 15, which, in turn, connects to a plurality of arrays 16 over an array bus 17. In one specific embodiment, the memory controller also houses a cache memory. Memory controller 15 includes circuitry for retrieving the contents of an addressed location from either the cache or the array 16 and for storing information therein in a conventional manner. Cache memories are well-known in the art and will not be discussed further.

The data processing system may include several types of input/output units, including disk and tape secondary storage elements, teletypewriters, keyboards and video display terminals, and the like. These units 20 are connected through an input/output bus 21 to a bus adapter 22. The input/output bus 21 may be as described in U.S. Patent No. 4,232,366, which was issued in the name of John V. Levy, et al, and assigned to the assignee of the present invention, the patent entitled "Bus For Data Processing System With Overlap Sequences". Other types of input/output buses may also be used to connect to similar input/output units (not shown), including an input/output bus 23, connected to a bus adapter 24, which may be as described in U.S. Patent No. 3,815,099, issued June 4, 1974, in the name of J. Cohen et al, and entitled "Data Processing System".

The bus adapters 22 and 24 are connected to transmit and receive data from memory controller 15 over an adapter bus 25. The bus adapters are also connected by an interrupt request/grant bus 26, over which the bus adapters can interrupt the processing of central processor unit 10 in the event of a change of status of one or more of the input/output units 20 in a conventional manner. The central processing unit 10 thus transfers interrupt grant signals directly with units in the input/output element, and transmits control information to, and receives status information from, the units in the input/output element 12 through memory controller 15. The memory controller thus controls the transfer of data to and from the central processing unit 10 and the input/output element 12, and the transfer of control and status information between the central processing unit and input/output element 12.

Prior to describing the new buffer, it will be helpful to describe the portion of one embodiment of the data processing system depicted in FIG. 1 in which the buffer is located. In one specific embodiment, the new buffer is used to buffer transfers between memory controller 15 and memory arrays 16.

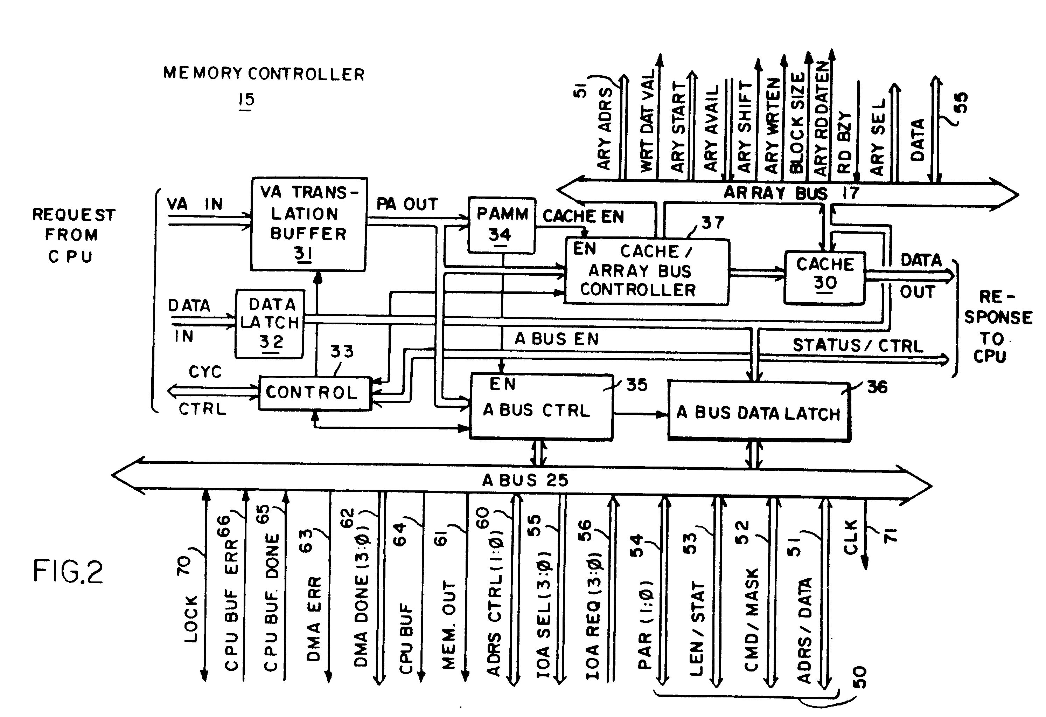

With reference to fig 2, when memory controller 15 receives a memory request from central processor unit (FIG. 1), it receives virtual address signals in a translation buffer 31, data signals in a data latch 32 if the transfer is a WRITE operation, and receives and transmits cycle control signals in a control logic 33, the latter including timing signals, READ/WRITE operation enabling signals, acknowledgement signals and so forth. The translation buffer translates the virtual address in a conventional manner and transmits PA OUT physical address signals to a physical address memory map 34. The physical address may identify either a location in a cache 30 or one of the arrays 16, on the one hand, or in the input/output element 12. If the PA OUT physical address signals identify a location in input/output element 12, the physical address memory map 34 transmits an ABUS EN adapter bus enable signal, which enables control circuitry 35 and a data latch 36 to engage in a transfer over adapter bus 25. Transfers over one embodiment of adapter of adapter bus 25 are described in the European Patent Publication EP-A-141742 and will not be described further herein. However, if the PA OUT physical address signals identify a location in cache 30 or one of arrays 16, the physical address memory map 34 transmits a CACHE EN enabling signal to a cache/array bus controller 37. Controller 37, in turn, determines whether the data identified by physical address is in cache 30 or only in arrays 16. If the data is in cache 30, the controller 37 enables the cache to store the data from the data latch 32 if the operation is a WRITE operation, or to transmit the data, if the operation is a READ operation, as DATA OUT signals to the central processing unit 10. The control logic 33 also transmits status and control signals to the central processing unit.

Before proceeding further, it will be helpful to present a description of a cache 30 which is used in memory controller 15. A cache memory works on the principle that a central processor unit 10 normally will access (that is, read data from or write data into) memory locations adjacent or very near to locations which it has recently accessed. A cache typically contains a small number of storage locations, smaller, that is, than the number of storage locations in an array. The locations in the cache are accessible quickly and thus if an item is in the cache, it can be transmitted to the central processing unit relatively quickly after the request is made. The storage locations in one embodiment of the cache 30 are divided into blocks of four storage locations each. Each block contains a copy of the data stored in four contiguous locations in an array, the data being selected because it is near to data which has recently been accessed by the central processing unit. The blocks in cache 30 are assigned addresses corresponding to the address of the corresponding data in the array 16. Controller 37 maintains a list of the addresses of the blocks in cache 30, and thus can determine whether the requested locations are in the cache, or whether it will have to retrieve a block of data from array 16 and establish a block in the cache for the requested data.

When a central processor unit 10 retrieves data from the memory element 11, if the cache/array bus controller 37 finds that the requested data is not in cache 30, it will initiate a transfer over array bus 17 to transfer an entire block of data around the requested location from array 16. This block of data is stored in the cache, and the data from the addressed storage location is transmitted to the central processing unit. If the central processor unit then reads an adjacent location, the cache/array bus controller 37 will typically find the data from the requested location in the cache. No transfer from the array is required to complete the READ operation.

When data is written into the memory by the central processor unit, the data is loaded into an addressed block in cache 30. Then one of two operations can occur. If the cache 30 is a "write-through" cache, cache/array bus controller 37 also immediately enables the data word to be written into the addressed location in arrays 16. If the cache 30 is a "write-back" cache, each block contains a flag which indicates whether the central processing unit has written data into it. If data has been written into a block, controller 37 may periodically enable the cache 30 to transmit the data from the entire block into the corresponding locations in arrays 16.

It can be seen that in transfers from cache 30 to arrays 16, during a "write-back" operation, blocks of data from four locations will normally be written into the arrays. However, on transfers from one embodiment of adapter bus 25, the block size may be any number of data words from one to four, with each data word being stored in one location in arrays 16, with the most common number of data words transferred from that embodiment of the adapter bus being two. Thus, while the cache transfers block of four words to arrays 16, transfers from the adapter bus 25 to the arrays 16 normally occur in blocks of two data words.

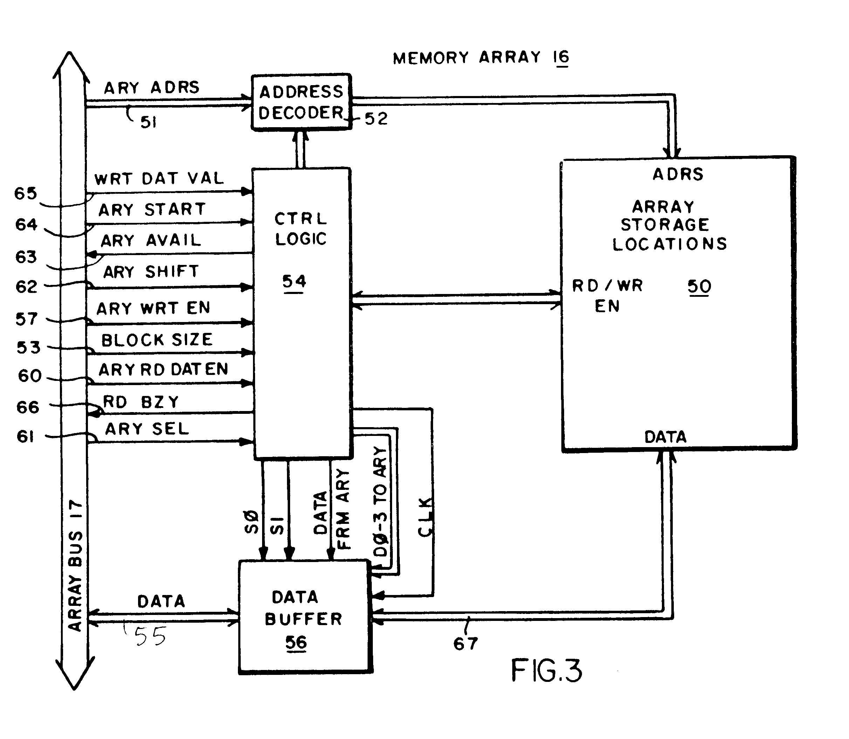

As has been mentioned, on accesses to memory, if the physical address provided by translation buffer 31 does not identify a location in block in cache 30, the cache/array bus controller 37 will perform an operation over array bus 17 with arrays 16. FIG. 3 illustrates a general block diagram of an array which may be used in connection with the memory controller 15 depicted in FIG. 2.

As shown in FIGS. 2 and 3, the array bus 17 connecting memory controller 15 and an array 16 includes a plurality of lines for carrying address, data and control signals. In one specific embodiment, the memory controller transmits array address signals on lines 51 which identify the block address, either lowest, or highest, address in the array into which the data will be written. Address decoder 52, enabled by array control logic 54, automatically increments the address it receives from address lines 51 to access the remaining locations in the block. For a WRITE operation, a BLOCK SIZE signal on a line 53 to control logic 54 identifies the number of words in the block to be written into storage locations 50. The data words themselves are transmitted over lines 55 to the data buffer 56.

In addition to these signals, a number of other control signals are transmitted over array bus 17. An ARY WRT EN write enabling signal on line 57 and ARY RD DAT EN read enable signal on line 60 indicate whether the operation is a READ or WRITE operation. An ARY SEL array select signal on line 61 enables one of the arrays to engage in a transfer. An ARY SHIFT array shift signal on line 62 enables control logic 54 to, in turn, enable data buffer 56 to shift data into data buffer 56 from data lines 55 during a WRITE operation or to shift the data from buffer 56 onto data lines 55 during a READ operation. An ARY AVAIL array available signal on lines 63 from each array 16, when asserted indicates that the array is available for an operation transfer, and an ARY START signal on line 64, when asserted, indicates that the array is to begin performing the transfer indicated on the other control lines. A WRT DAT VAL write data valid signal on line 65 is a timing signal which control logic 54 uses to enable data buffer 56 to receive the data from lines 55 during a WRITE operation. Finally, a RD BZY read busy signal, transmitted by control logic 54 to memory controller 15, indicates that the array is in the process of retrieving data from an addressed location during a READ operation. When the signal is negated, the read data is available to the memory controller in data buffer 56.

During a WRITE operation from adapter bus 25 or cache 30 to the storage locations 50 on array 16 (FIG. 3), the array control logic 54 first enables all of the data words in the block being transferred to be accumulated in data buffer 56 from the array bus 17. After the entire block has been stored in the buffer, the control logic 54 enables them to be transmitted to storage locations 50. The number of data words in the block is indicated by the condition of the BLOCK SIZE signal on line 53. During a READ operation from storage locations 50 to the memory controller 15, the control logic 54 also enables a block of data to be stored in the data buffer 56 before transmitting it onto array bus 17.

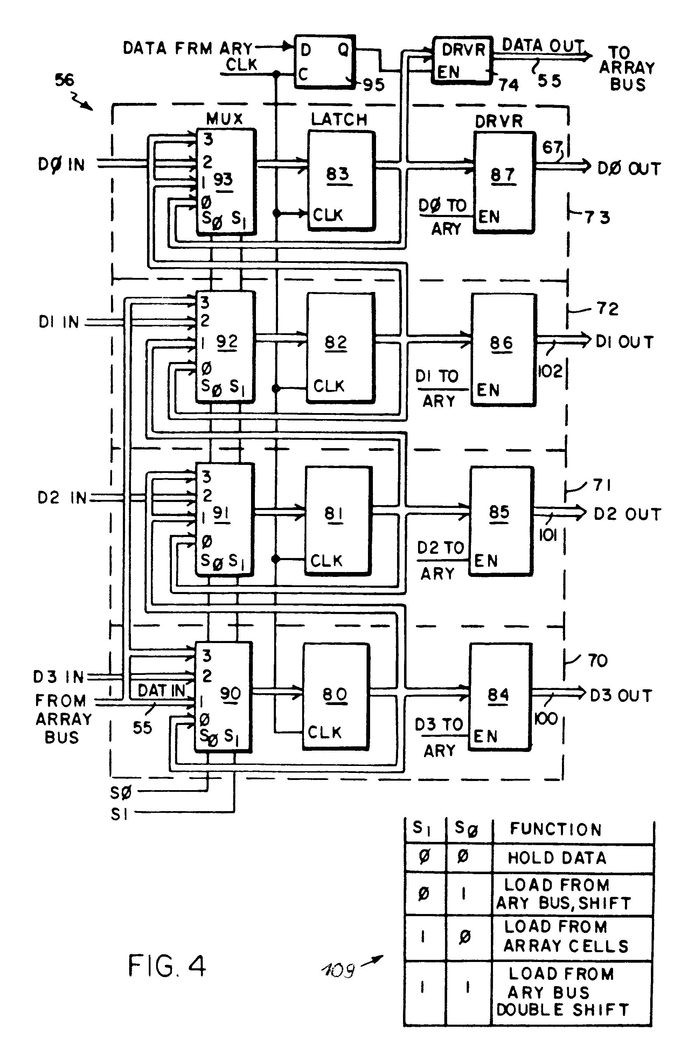

FIG. 4 contains a circuit diagram of a data buffer 56 constructed in accordance with the invention. The buffer includes four stages 70 through 73, with stage 70 comprising the input stage of the buffer and stage 73 comprising the output stage. In addition, the buffer 56 includes a driver 74 which receives data signals from stage 73 and couples them onto data line 55 of array bus 17 (FIG. 3).

The stages 70 through 73 of the buffer are generally similar in construction and operation. Each includes a data latch 80 through 83, each of which stores a word of data, a driver 84 through 87 which is capable of transmitting the signals in latch 83 onto an output line, and a multiplexer 90 through 93 which selects signals from one of four sources and couples the selected signals for storage in latches 80 through 83. The source selection in multiplexers 90 through 93 is governed by S0 and S1 control signals from control logic 54. Buffer 56 also operates in conjunction with DAT FRM ARY and D0-3 TO ARY direction control signals from control logic 54, and a CLK timing signal, which is also supplied by control logic 54. The CLK timing signal enables latches 80 through 83 to receive and store data from the respective multiplexers 90-93. The DAT FRM ARY signal enables a flip-flop 95 to be set by the CLK timing signal, which, in turn, enables driver 74 to couple the signals from latch 83 onto data line 55. The D0-3 TO ARY signals enable drivers 84-87 to couple the contents of the respective latches onto output lines 67 or 100 through 102.

As has been mentioned, multiplexers 90 through 93 couple signals from one of four sources to the inputs of latches 80 through 83. With reference to the table 109 depicted in FIG. 4, the buffer 56 can perform the following four operations in response to the S0 and S1 control signals:

(A) If both the S1 and S0 function signals are negated, each multiplexer couples the output signals from the latch in its stage to the input of the same latch. Accordingly, each stage holds the data word that is present in the storage in response to the negation of both the S1 and S0 signals.

(B) If the S1 signal is negated, and the S0 signal is asserted, each multiplexer in stages 70 through 73 couple the output of the latch in the preceeding stage to the input of the latch in its stage, thereby enabling a shift of data from the input stage 70 towards the output stage 73. Simultaneously, the multiplexer 90 couples the data signals from lines 55 to the input of latch 80 for storage. This is the normal shift operation in a first-in-first-out buffer.

(C) If the S1 signal is asserted and the S0 control signal is negated, buffer 56 is enabled to receive and store the data from the storage locations 50 (FIG. 3) in array 16. The data are coupled through multiplexers 90 through 93 and stored in the respective latches 80 through 83.

(D) In accordance with the invention, when the S1 and S0 signals are both asserted, multiplexers 90 and 92 both are enabled to couple the data word from array bus data line 55 to be stored in their respective latches 80 and 82. Control logic 54 asserts both S1 and S0 control signals in response to the BLOCK SIZE signal on line 53 (FIG. 3) indicating that the block being transmitted on data line 55 is a two word, as opposed to a four word, block. During a second word of a two-word transfer, the control logic 54 also enables both the S1 and S0 control signals to be asserted. With the control signals in this condition, the first word received by buffer 56, which is stored in both latches 80 and 82, is shifted into latches 81 and 83. The second word of the transfer is then stored into latches 80 and 82 through multiplexers 90 and 92.

As a result of this arrangement within buffer 56, the data words of the two-word block are stored in latches 83 and 82, that is, at the output end of the buffer. Accordingly, control logic 54 can immediately begin transferring the data to the memory cells 50. In prior buffers, which do not contain the shift arrangement depicted in FIG. 4, the buffer's control logic would have to enable the buffer to shift the data through the buffer to the output stage, which would require two cycles for a two-word block, before it would be available to be transferred to storage locations 50.

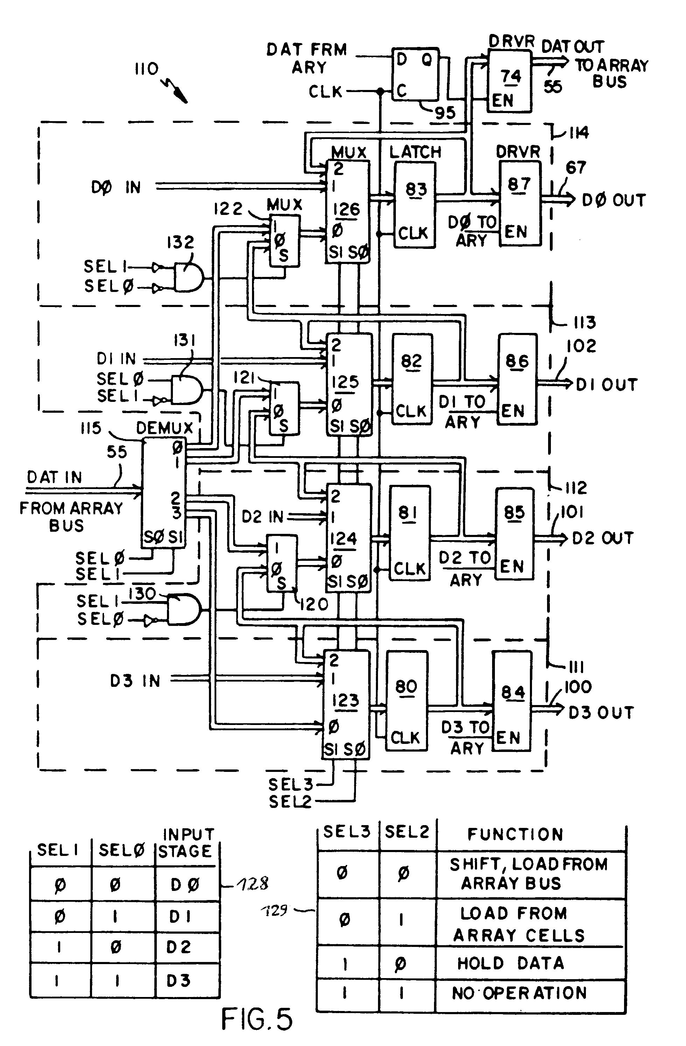

FIG. 5 presents a second embodiment of the data buffer, designated by the reference numeral 110, which enables data to be loaded from data line 55 of array bus 17 (FIG. 3) into any of the buffer stages 111 through an output stage 114. Like buffer 56 depicted in FIG. 4, the buffer 110 includes an output driver 74 enabled by a flip-flop 95 to transmit data from the output stage 114 onto lines 55 of array bus 17. Similarly, each stage includes a latch 80 through 83 and driver 84 through 87.

The advantage of buffer 110 is provided by a demultiplexer 115 which couples data words from data line 55 to one of the stages 111 through 114 based on the condition of the SEL1 and SEL0 selection signals, which would be provided by control logic 54. The SEL1 and SEL0 selection signals also control an input multiplexer 120 through 122 in each of stages 112 through 114 of the buffer. These multiplexers enable the stage to couple either (A) the input signal from demultiplexer 115 or (B) the contents from the latch in the preceeding stage 111 through 113, to a second multiplexer 124 through 126. Stage 111 does not include a multiplexer corresponding to multiplexers 120 through 122; the data signals from demultiplexer 115 are coupled directly to an input of a multiplexer 123.

Multiplexers 123 through 126 enable the stages 111 through 114 of buffer 110 to perform many of the operations enabled by multiplexers 90 through 93 of buffer 56. Specifically, the multiplexers 123 through 126, under control of SEL3 and SEL2 function control signals supplied by control logic 54, enable the buffer to (see Table 129 on FIG. 5):

(A) Load and shift data words from the data line 55 of array bus 17, if the SEL2 and SEL3 function control signals are both negated,

(B) Load from the array storage locations 50, if the SEL 2 signal is asserted and the SEL3 signal is negated, and

(C) Hold the data word in the stage, if the SEL3 signal is asserted and the SEL2 signal is negated. If both the SEL3 and SEL2 signals are asserted, no operation is provided.

The variable input stage feature of data buffer 110 is provided by demultiplexer 115 and multiplexers 120 through 122. The selection of input signals coupled through the multiplexers 120 through 123 is governed by AND gates 130 through 132, which are energized by the SEL0 and SEL1 control signals. The four operations enabled in response to the various conditions of the SEL1 and SEL0 control signals are shown in Table 128 of FIG. 5 and are described below in paragraphs (A) through (D):

(A) If the block has four data words, the control logic 54 will be enabled by a BLOCK SIZE signal to assert the SEL1 and SEL0 control signals. The input signals on lines 55 are coupled by demultiplexer 115 to stage 111, and specifically to multiplexer 123. The output signals from AND gates 130 through 132 are all negated, which enable the multiplexers 120 through 122 to couple the output signals from latches 80 through 82 of stages 111 through 113 to the inputs of multiplexers 124 through 126 for storage in latches 81 through 83. Thus the contents of stages 111 through 113 will be shifted one stage towards the output stage 114, and the data from data line 55 will be stored in latch 80 of stage 111. Thus, if the SEL1 and SEL0 signals are both asserted, the input stage is stage 111.

(B) If, however, the block includes three data words control logic 54 will be enabled to assert the SEL1 signal and negate the SEL0 signal. Demultiplexer 115 couples the data to the "1" input of multiplexer 120 in stage 112. The SEL1 and SEL0 signals also energize AND gate 130, which enables multiplexer 120 to couple the data to multiplexer 124. AND gates 131 and 132 enable their respective multiplexers 121 and 122 to couple the data stored in latches 81 and 82, respectively, to the inputs of multiplexers 125 and 126 for storage in latches 82 and 83. Thus, with the SEL1 signal negated and the SEL0 signal asserted, stage 112 is the input stage.

(C) If the block being transferred is a two-word block, control logic 54 will negate the SEL1 control signal and assert the SEL0 control signal. With the control signals in this condition, demultiplexer 115 couples the data signals from data line 55 to an input of multiplexer 121 in stage 113. AND gate 131 enables multiplexer 121 to couple the data from demultiplexer 115 to multiplexer 125 for storage in latch 82. Simultaneously, AND gate 131 enables multiplexer 122 to couple the data in latch 82 to multiplexer 126 for storage in latch 83. Thus, with the SEL1 signal asserted and the SEL0 signal negated, stage 113 is the input stage. Further, after the entire block is loaded into the buffer, the first data word is present in stage 114.

(D) Finally, if the block being transferred is a one-word block, control logic 54 will negate both the SEL1 and SEL0 control signals. In this condition, demultiplexer 115 couples the data from data line 55 to multiplexer 122. AND gate 132 is energized to enable multiplexer 122 to couple the signals to multiplexer 126 for storage in latch 83. The data word is thus immediately available in stage 114.

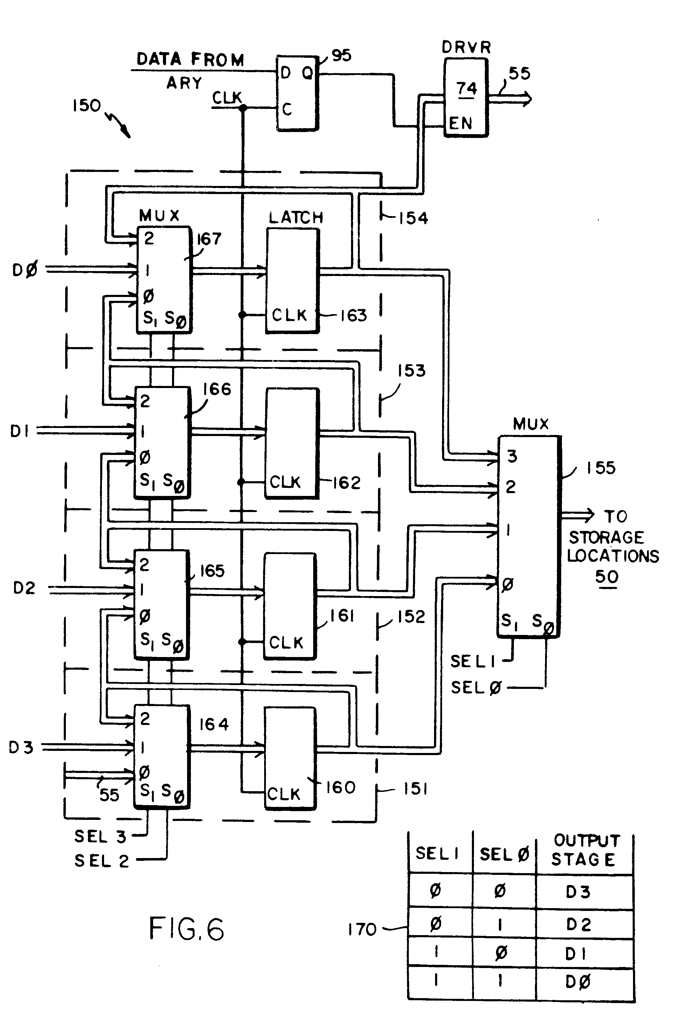

FIG. 6 depicts another embodiment of the buffer in which the output stage is varied depending on the conditions of the SEL1 and SEL0 control signals (see table 170). Buffer 150 includes four identical stages 151 through 154, all of which are connected to an output multiplexer 155. The stages 151 through 154 operate under control of the SEL2 and SEL3 control signals to perform the same operations as the stages 111 through 114 of buffer 110 (FIG. 5). Furthermore, buffer 150 includes a driver 74 and a flip-flop 95 for transmitting data over data line 55 to the memory controller 15.

Each of the stages 151 through 154 of buffer 150 includes a latch 160 through 163 for storing a data word and a multiplexer 164 for coupling data words to the respective latches from one of several sources in response to the various conditions of the SEL3 and SEL2 control signals. The operations performed by multiplexers 1 & 4 through 167 in response to the SEL2 and SEL3 signals are generally similar to the responses of multiplexers 123 through 126 in response to the corresponding signals, and reference may be made to table 129 (figs. 5) for those operations. If the SEL3 control signal is asserted and SEL2 control signal is negated, each of the multiplexers 164 through 167 couples the contents of the respective latches for storage back in the same latches, thereby holding the contents in the same stage. On the other hand, if the SEL3 control signal is negated and the SEL2 control signal is asserted, the multiplexers 164 through 167 couple D0 through D3 data signals from the array storage locations 50 (FIG. 3) for storage in the respective latches 160 through 163. Finally, if both the SEL3 and SEL2 control signals are negated, the multiplexers 165 through 167 are enabled to couple the contents of latches 160 through 163 to their respective latches 161 through 163 to enable a shift of the contents of stages 151 through 153 to stages 152 through 154. Simultaneously, multiplexer 164 is enabled to couple the data word on data line 55 for storage in latch 160. Thus, for transfers from array bus 55, stage 151 is always the input stage of the buffer.

Multiplexer 155, however, enables control logic 54 to vary the output stage of the buffer in response to the BLOCK SIZE signal from memory controller 15 as follows:

(A) If the BLOCK SIZE signal indicates a block size of one data word, control logic 54 negates both the SEL1 and SEL0 control signals. In this condition, multiplexer 155 couples the output of latch 160 in stage 151 to storage locations 50.

(B) If the BLOCK SIZE signal indicates a block size of two data words, control logic 54 asserts the SEL0 control signal and negates the SEL1 control signal. In this condition, multiplexer 155 couples the output of latch 161 in stage 152 to storage locations 50.

(C) If the BLOCK SIZE signal indicates a block size of three data words, control logic 54 asserts the SEL1 control signal and negates the SEL0 control signal. In this condition, multiplexers 155 couples the output of latch 162 in stage 153 to storage locations 50.

(D) If the BLOCK SIZE signal indicates a block size of four data words, control logic 54 asserts both the SEL1 and SEL0 control signals. In this condition, multiplexer 155 couples the output of latch 163 in stage 154 to storage locations 50.

It should be noted that the SEL1 and SEL0 control signals do not inhibit the output of the latch in the selected output stage from also being shifted into a next higher stage. This, however, does not effect the operation of the stages between the input stage and the selected output stage.

It is thus apparent that buffers 56 (FIG. 4), 110 (FIG. 5), and 150 (FIG. 6) enable the transfer of blocks of data words of multiple sizes, or numbers of words, between two elements in a data processing system, such that when the block is loaded into the buffer, the first data word is available at the output stage of the buffer. This advantage is present in buffer 56 depicted in FIG. 4 only if the transfers are limited to two words or four words; however, the circuits of buffers 110 and 150 depicted in FIGS. 5 and 6 enable any number of words from one to four to be transferred and achieve the aforementioned advantage.

Although the specific embodiments of the buffer depicted in FIGS. 4 through 6 have been limited to buffers which store four words, it is readily apparent to those skilled in the art that the buffers can be extended to any number of stages, and achieve the benefits of the invention.

## Claims

1. A memory array (16) for use in a data processing system, the data processing system including an array bus (17) for coupling a memory controller (15) to the memory array, wherein the memory controller controls transfer between the memory array and the memory controller of a variable number of data words contained in a data block by transmitting memory control signals on the array bus for the data block, wherein the memory control signals corresponding to the data block include a block size signal to indicate the number of data words contained in the data block and an address signal, wherein the variable number of data words contained in the data blocks does not exceed a predetermined maximum, and wherein the memory array comprises:

a plurality of storage locations (50) for storing data words;

address means (52), coupled to the plurality of storage locations and the array bus, and responsive to the address signal corresponding to the data block, for selecting a number of storage locations in which the number of data words contained in the data block are stored;

data buffer means (56), coupled to the storage locations and the array bus, for buffering the number of data words contained in the data block, wherein the data buffer means includes:

a plurality of buffer stages (80, 81, 82, 83) ordered serially from an input stage (80) to an output stage (83), wherein the predetermined maximum does not exceed the number of buffer stages, each buffer stage storing one data word and having an input terminal and an output terminal, wherein each buffer stage other than the input stage can receive one data word on its input terminal from a preceding buffer stage and each buffer stage other than the output stage can provide one data word on its output terminal to a following buffer stage;

means (100, 101, 102, 67) for coupling the output terminal of each stage to the plurality of storage locations to enable data words contained in the data block to be loaded into the selected number of storage locations;

means (90, 91, 92, 93, 123, 124, 125, 126) for coupling the input terminal of each stage to the plurality of storage locations to enable data words contained in the data block to be loaded from the selected number of storage locations; and

output stage coupling means (74) for coupling the output terminal of the output stage to the array bus to enable serial transfer of data words from the output stage to the array bus; and

characterized by:

control means (54), coupled to the array bus and the data buffer means, for receiving the block size signal, and for providing an input selection signal that selects a buffer stage to be coupled to the array bus to enable serial transfer of data words to the selected stage from the array bus, wherein the selected stage corresponds to the buffer stage that preceeds the output stage coupling means by the number of data words contained in the data block; and

input selection means (90, 91, 92, 93, 115, 120, 121, 122), coupled to the control means and the data buffer means, and responsive to the input selection signal, for coupling the input terminal of the selected stage to the array bus, and for coupling the input terminal of each stage following the selected stage to the output terminal of the preceding stage, to enable data words contained in the data block to be serially transferred to the output stage from the array bus without waiting for serial transfers through empty buffer stages at times when the number of data words contained in the data block is less than the number of buffer stages.

2. A memory array (16) for use in a data processing system, the data processing system including an array bus (17) for coupling a memory controller (15) to the memory array, wherein the memory controller controls transfer between the memory array and the memory controller of a variable number of data words contained in a data block by transmitting memory control signals on the array bus for the data block, wherein the memory control signals corresponding to the data block include a block size signal to indicate the number of data words contained in the data block and an address signal, wherein the variable number of data words contained in the data blocks does not exceed a predetermined maximum, and wherein the memory array comprises:

a plurality of storage locations (50) for storing data words;

address means (52), coupled to the plurality of storage locations and the array bus, and responsive to the address signal corresponding to the data block, for selecting a number of storage locations in which the number of data words contained in the data block are stored;

data buffer means (56), coupled to the storage locations and the array bus, for buffering the number of data words contained in the data block, wherein the data buffer means includes:

a plurality of buffer stages (160, 161, 162, 163) ordered serially from an input stage (160) to an output stage (163), wherein the predetermined maximum does not exceed the number of buffer stages, each buffer stage storing one data word and having an input terminal and an output terminal, wherein each buffer stage other than the input stage can receive one data word on its input terminal from a preceding buffer stage and each buffer stage other than the output stage can provide one data word on its output terminal to a following buffer stage;

means (164, 165, 166, 167) for coupling the input terminal of each stage to the plurality of storage locations to enable data words contained in the data block to be loaded from the selected number of storage locations;

input stage coupling means (55, 164) for coupling the input terminal of the input stage to the array bus to enable serial transfer of data words to the input stage from the array bus; and

output stage coupling means (74) for coupling the output terminal of the output stage to the array bus to enable serial transfer of data words from the output stage to the array bus; and

characterized by:

control means (54), coupled to the array bus and the data buffer means, for receiving the block size signal, and for providing an output selection signal that selects a buffer stage to be coupled to the plurality of storage locations to enable data words to be loaded from the selected stage into the selected number of storage locations, wherein the selected stage corresponds to the buffer stage that follows the input stage coupling means by the number of data words contained in the data block; and

output selection means (155), coupled to the control means and the data buffer means, and responsive to the output selection signal, for coupling the output terminal of the selected stage to the plurality of storage locations to enable data words contained in the data block to be loaded into the selected number of storage locations from the selected stage without waiting for serial transfers through empty buffer stages at times when the number of data words contained in the data block is less than the number of buffer stages.

## Revendications

1. Matrice de mémoire (16) pour système de traitement de données, le système de traitement de données incluant un bus de matrice (17) pour coupler un contrôleur de mémoire (15) à la matrice de mémoire, dans lequel le contrôleur de mémoire commande le transfert entre la matrice de mémoire et le contrôleur de mémoire d'un nombre variable de mots de données contenus dans un bloc de données en émettant des signaux de commande de mémoire sur le bus de matrice pour le bloc de données, dans lequel les signaux de commande de mémoire correspondant au bloc de données incluent un signal de longueur de bloc pour indiquer le nombre de mots de données contenus dans le bloc de données et un signal d'adresse, dans lequel le nombre variable de mots de données contenus dans les blocs de données ne dépasse pas un maximum prédéterminé, et dans lequel la matrice de mémoire comprend:

une pluralité d'emplacements de mémoire (50) pour mémoriser des mots de données;

un moyen d'adressage (52), couplé à la pluralité d'emplacements de mémoire et au bus de matrice, et réagissant au signal d'adresse correspondant au bloc de données, pour sélectionner un nombre d'emplacements de mémoire où sont mémorisés le nombre de mots de données contenus dans le bloc de données;

un moyen à tampon de données (56), couplé aux emplacements de mémoire et au bus de matrice, pour mettre en mémoire tampon le nombre de mots de données contenus dans le bloc de données, dans lequel le moyen à tampon de données comprend:

une pluralité d'étages de tampon (80,81,82,83) ordonnés en série d'un étage d'entrée (80) à un étage de sortie (83), dans laquelle le maximum prédéterminé ne dépasse pas le nombre d'étages de tampon, chaque étage de tampon mémorisant un mot de données et comportant une borne d'entrée et une borne de sortie, dans laquelle chaque étage de tampon autre que l'étage d'entrée peut recevoir un mot de données par sa borne d'entrée d'un étage de tampon précédent et chaque étage de tampon autre que l'étage de sortie peut fournir un mot de données par sa borne de sortie à un étage de tampon suivant;

des moyens (100,101,102,67) pour coupler la borne de sortie de chaque étage à la pluralité d'emplacements de mémoire afin de valider le chargement des mots de données contenus dans le bloc de données dans le nombre sélectionné d'emplacements de mémoire;

des moyens (90,91,92,93,123,124,125,126) pour coupler la borne d'entrée de chaque étage à la pluralité d'emplacements de mémoire afin de valider le chargement des mots de données contenus dans le bloc de données à partir du nombre sélectionné d'emplacements de mémoire; et

un moyen de couplage d'étage de sortie (74) pour coupler la borne de sortie de l'étage de sortie au bus de matrice afin de valider le transfert en série des mots de données de l'étage de sortie au bus de matrice; et

caractérisé par:

un moyen de commande (54), couplé au bus de matrice et au moyen à tampon de données, pour recevoir le signal de longueur de bloc, et pour fournir un signal de sélection d'entrée qui sélectionne un étage de tampon pour le coupler au bus de matrice afin de valider le transfert en série des mots de données jusqu'à l'étage sélectionné à partir du bus de matrice, dans lequel l'étage sélectionné correspond à l'étage de tampon qui précède le moyen de couplage d'étage de sortie du nombre de mots de données contenus dans le bloc de données; et

des moyens de sélection d'entrée (90,91,92,93,115, 120,121,122) couplés au moyen de commande et au moyen à tampon de données, et réagissant au signal de sélection d'entrée, pour coupler la borne d'entrée de l'étage sélectionné au bus de matrice, et pour coupler la borne d'entrée de chaque étage suivant l'étage sélectionné à la borne de sortie de l'étage précédent, pour valider le transfert en série des mots de données contenus dans le bloc de données jusqu'à l'étage de sortie à partir du bus de matrice sans attendre les transferts en série dans les étages vides du tampon à des temps où le nombre de mots de données contenus dans le bloc de données est inférieur au nombre d'étages de tampon.

2. Matrice de mémoire (16) pour système de traitement de données, le système de traitement de données incluant un bus de matrice (17) pour coupler un contrôleur de mémoire (15) à la matrice de mémoire, dans lequel le contrôleur de mémoire commande le transfert entre la matrice de mémoire et le contrôleur de mémoire d'un nombre variable de mots de données contenus dans un bloc de données en émettant des signaux de commande de mémoire sur le bus de matrice pour le bloc de données, dans lequel les signaux de commande de mémoire correspondant au bloc de données incluent un signal de longueur de bloc pour indiquer le nombre de mots de données contenus dans le bloc de données et un signal d'adresse, dans lequel le nombre variable de mots de données contenus dans les blocs de données ne dépasse pas un maximum prédéterminé, et dans lequel la matrice de mémoire comprend:

une pluralité d'emplacements de mémoire (50) pour mémoriser des mots de données;

un moyen d'adressage (52), couplé à la pluralité d'emplacements de mémoire et au bus de matrice, et réagissant au signal d'adresse correspondant au bloc de données, pour sélectionner un nombre d'emplacements de mémoire où sont mémorisés le nombre de mots de données contenus dans le bloc de données;

un moyen à tampon de données (56), couplé aux emplacements de mémoire et au bus de matrice, pour mettre en mémoire tampon le nombre de mots de données contenus dans le bloc de données, dans lequel le moyen à tampon de données comprend:

une pluralité d'étages de tampon (160,161,162,163) ordonnés en série d'un étage d'entrée (160) à un étage de sortie (163), dans laquelle le maximum prédéterminé ne dépasse pas le nombre d'étages de tampon, chaque étage de tampon mémorisant un mot de données et comportant une borne d'entrée et une borne de sortie, dans laquelle chaque étage de tampon autre que l'étage d'entrée peut recevoir un mot de données par sa borne d'entrée d'un étage de tampon précédent et chaque étage de tampon autre que l'étage de sortie peut fournir un mot de données par sa borne de sortie à un étage de tampon suivant;

des moyens (164,165,166,167) pour coupler la borne d'entrée de chaque étage à la pluralité d'emplacements de mémoire afin de valider le chargement des mots de données contenus dans le bloc de données à partir du nombre sélectionné d'emplacements de mémoire;

des moyens de couplage d'étage d'entrée (55,164) pour coupler la borne d'entrée de l'étage d'entrée au bus de matrice afin de valider le transfert en série de mots de données jusqu'à l'étage d'entrée à partir du bus de matrice; et

un moyen de couplage d'étage de sortie (74) pour coupler la borne de sortie de l'étage de sortie au bus de matrice afin de valider le transfert en série de mots de données de l'étage de sortie jusqu'au bus de matrice; et caractérisé par:

un moyen de commande (54), couplé au bus de matrice et au moyen à tampon de données, pour recevoir le signal de longueur de bloc, et pour fournir un signal de sélection de sortie qui sélectionne un étage de tampon à coupler à la pluralité d'emplacements de mémoire afin de valider le chargement de mots de données de l'étage sélectionné dans le nombre sélectionné d'emplacements de mémoire, dans lequel l'étage sélectionné correspond à l'étage de tampon qui suit les moyens de couplage d'étage d'entrée du nombre de mots de données contenus dans le bloc de données; et

un moyen de sélection de sortie (155), couplé au moyen de commande et au moyen à tampon de données, et réagissant au signal de sélection de sortie, pour coupler la borne de sortie de l'étage sélectionné à la pluralité d'emplacements de mémoire afin de valider le chargement des mots de données contenus dans le bloc de données dans le nombre sélectionné d'emplacements de mémoire à partir de l'étage sélectionné sans attendre les transferts en série dans les étages vides du tampon à des temps où le nombre de mots de données contenus dans le bloc de données est inférieur au nombre d'étages de tampon.

**Patentansprüche**

1. Speicherfeld (16) zum Einsatz in einem Datenverarbeitungssystem, wobei das Datenverarbeitungssystem einen Feldbus (17) zum Verbinden einer Speichersteuereinrichtung (15) mit dem Speicherfeld aufweist, wobei die Speichersteuereinrichtung den Transfer zwischen dem Speicherfeld und der Speichersteuereinrichtung mit einer variablen Anzahl von Datenwörtern steuert, die in einem Datenblock enthalten sind, indem Speichersteuersignale auf dem Feldbus für den Datenblock übertragen werden, wobei die Speichersteuersignale, die dem Datenblock zugeordnet sind, ein Blockgrößensignal, um die Anzahl der Datenwörter, die in dem Datenblock enthalten sind, anzuzeigen, und ein Adressignal enthalten, wobei die variable Anzahl der Datenwörter, die in den Datenblöcken enthalten sind, ein vorgegebenes Maximum nicht überschreitet und das Speicherfeld aufweist:

eine Vielzahl von Speicherstellen (50) zum Speichern von Datenwörtern;

eine Adresseinrichtung (52), die mit der Vielzahl von Speicherstellen und dem Feldbus verbunden ist und auf das dem Datenblock zugeordnete Adressignal reagiert, zum Auswählen einer Anzahl von Speicherstellen, in denen die Anzahl der Datenwörter, die in dem Datenblock enthalten sind, gespeichert ist;

eine Datenpuffereinrichtung (56), die mit den Speicherstellen und dem Feldbus verbunden ist, zum Puffern der Anzahl der Datenwörter, die in dem Datenblock enthalten sind, wobei die Datenpuffereinrichtung aufweist:

eine Vielzahl von Pufferstufen (80, 81, 82, 83), die seriell von einer Eingangsstufe (80) zu einer Ausgangsstufe (83) geordnet sind, wobei das vorgegebene Maximum nicht die Anzahl der Pufferstufen überschreitet und jede Pufferstufe ein Datenwort speichert und einen Eingangsanschluß und einen Ausgangsanschluß hat, wobei jede Pufferstufe, die nicht die Eingangsstufe ist, ein Datenwort an ihrem Eingangsanschluß von einer vorhergehenden Pufferstufe empfangen kann und wobei jede Pufferstufe, die nicht die Ausgangsstufe ist, ein Datenwort an ihrem Ausgangsanschluß für eine folgende Pufferstufe bereitstellen kann;
eine Einrichtung (100, 101, 102, 67) zum Verbinden des Ausgangsanschlusses jeder Stufe mit einer Vielzahl von Speicherstellen, um Datenwörter freizugeben, die in dem Datenblock enthalten sind, in die ausgewählte Anzahl von Speicherstellen geladen zu werden;
eine Einrichtung (90, 91, 92, 93, 123, 124, 125, 126) zum Verbinden des Eingangsanschlusses jeder Stufe mit einer Vielzahl von Speicherstellen, um Datenwörter freizugeben, die in dem Datenblock enthalten sind, aus der ausgewählten Anzahl von Speicherstellen geladen zu werden; und
eine Ausgangsstufenverbindungseinrichtung (74) zum Verbinden des Ausgangsanschlusses mit der Ausgangsstufe des Feldbusses, um eine serielle Übertragung von Datenwörtern von der Ausgangsstufe zum Feldbus freizugeben; und
gekennzeichnet durch:
eine Steuereinrichtung (54), die mit dem Feldbus und der Datenpuffereinrichtung verbunden ist, zum Empfangen des Blockgrößensignals und zum Erzeugen eines Eingangsauswahlsignals, das eine Pufferstufe auswählt, die mit dem Feldbus zu verbinden ist, um eine serielle Übertragung von Datenwörtern zu der ausgewählten Stufe von dem Feldbus freizugeben, wobei die ausgewählte Stufe der Pufferstufe entspricht, die der Ausgangsstufenverbindungseinrichtung um die Anzahl der Datenwörter, die in dem Datenblock enthalten sind, vorangeht; und eine Eingangsauswahleinrichtung (90, 91, 92, 93, 115, 120, 121, 122), die mit der Steuereinrichtung und der Datenpuffereinrichtung verbunden ist und auf das Eingangsauswahlsignal reagiert, zum Verbinden des Eingangsanschlusses der ausgewählten Stufe mit dem Feldbus und zum Verbinden des Eingangsanschlusses jeder Stufe, die der ausgewählten Stufe folgt, mit dem Ausgangsanschluß der vorhergehenden Stufe, um Datenwörter freizugeben, die in dem Datenblock enthalten sind, seriell über die Ausgangsstufe von dem Feldbus übertragen zu werden, ohne daß auf serielle Übertragungen durch leere Pufferstufen zu Zeitpunkten gewartet wird, wenn die Anzahl der Datenwörter, die in dem Datenblock enthalten sind, kleiner als die Anzahl der Pufferstufen ist.

2. Speicherfeld (16) zum Einsatz in einem Datenverarbeitungssystem, wobei das Datenverarbeitungssystem einen Feldbus (17) zum Verbinden einer Speichersteuereinrichtungs (15) mit dem Speicherfeld aufweist und die Speichersteuereinrichtung den Transfer zwischen dem Speicherfeld und der Speichersteuereinrichtung mit einer variablen Anzahl von Datenwörtern, die in einem Datenblock enthalten sind, steuert, indem Speichersteuersignale auf dem Feldbus für den Datenblock übertragen werden, wobei die Speichersteuersignale, die dem Datenblock zugeordnet sind, ein Blockgrößensignal, um die Anzahl von Datenwörtern, die in dem Datenblock enthalten sind, anzugeben und ein Adressignal aufweisen, wobei die variable Anzahl der Datenwörter, die in den Datenblöcken enthalten sind, ein vorgegebenes Maximum nicht überschreitet und wobei das Speicherfeld aufweist:
eine Vielzahl von Speicherstellen (50) zum Speichern von Datenwörtern;
eine Adresseinrichtung (52), die mit der Vielzahl von Speicherstellen und dem Feldbus verbunden ist und die auf das Adressignal, das dem Datenblock zugeordnet ist, reagiert, zum Auswählen einer Anzahl von Speicherstellen, in denen die Anzahl der Datenwörter, die in dem Datenblock enthalten sind, gespeichert ist;
eine Datenpuffereinrichtung (56), die mit den Speicherstellen und dem Feldbus verbunden ist, zum Puffern der Anzahl der Datenwörter, die in dem Datenblock enthalten sind, wobei die Datenpuffereinrichtung aufweist:
eine Vielzahl von Pufferstufen (160, 161, 162, 163), die seriell von einer Eingangsstufe (160) zu einer Ausgangsstufe (163) geordnet sind, wobei das vorgegebene Maximum die Anzahl der Pufferstufen nicht überschreitet und jede Pufferstufe ein Datenwort speichert und einen Eingangsanschluß und einen Ausgangsanschluß hat, wobei jede Pufferstufe, die nicht der Eingangsstufe entspricht, ein Datenwort an ihrem Eingangsanschluß von einer vorhergehenden Pufferstufe empfängt und jede Pufferstufe, die nicht der Ausgangsstufe entspricht, ein Datenwort an ihrem Ausgangsanschluß für eine nachfolgende Pufferstufe bereitstellt;
eine Einrichtung (164, 165, 166, 167) zum Verbinden des Eingangsanschlusses jeder Stufe mit einer Vielzahl von Speicherstellen, um in dem Datenblock enthaltene Datenwörter freizugeben, aus der ausgewählten Anzahl von Speicherstellen geladen zu werden;
eine Eingangsstufenverbindungseinrichtung (55, 164) zum Verbinden des Eingangsanschlusses der Eingangsstufe mit dem Feldbus, um eine serielle Übertragung von Datenwörtern zu der Eingangsstufe von dem Feldbus freizugeben;
eine Ausgangsstufenverbindungseinrichtung (74) zum Verbinden des Ausgangsanschlusses der Ausgangsstufen mit dem Feldbus, um eine serielle Übertragung von Datenwörtern von der Ausgangsstufe zu dem Feldbus freizugeben; und

gekennzeichnet durch:

eine Steuereinrichtung (54), die mit dem Feldbus und der Datenpuffereinrichtung verbunden ist, zum Empfangen des Blockgrößensignals und zum Erzeugen eines Ausgangsauswahlsignals, das eine Pufferstufe auswählt, die mit einer Vielzahl von Speicherstellen zu verbinden ist, um Datenwörter freizugeben, von der ausgewählten Stufe in die ausgewählte Anzahl von Speicherstellen geladen zu werden, wobei die ausgewählte Stufe der Pufferstufe entspricht, die der Eingangsstufenverbindungseinrichtung um die Anzahl der Datenwörter, die in dem Datenblock enthalten sind, folgt;

eine Ausgangsauswahleinrichtung (155), die mit der Steuereinrichtung und Datenpuffereinrichtung verbunden ist und die auf das Ausgangsauswahlsignal reagiert, zum Verbinden des Ausgangsanschlusses der ausgewählten Stufe mit einer Vielzahl von Speicherstellen, um Datenwörter freizugeben, die in dem Datenblock enthalten sind, in die ausgewählte Anzahl von Speicherstellen von der ausgewählten Stufe geladen zu werden, ohne daß auf serielle Übertragungen durch leere Pufferstufen zu Zeitpunkten gewartet wird, wenn die Anzahl der Datenwörter, die in dem Datenblock enthalten sind, kleiner ist als die Anzahl der Pufferstufen.

FIG. I

FIG.2

MEMORY CONTROLLER
15

EP 0 141 753 B1

FIG.3

FIG. 4

| $S_1$ | $S_0$ | FUNCTION |
|-------|-------|----------|
| Ø | Ø | HOLD DATA |
| Ø | I | LOAD FROM ARY BUS, SHIFT |
| I | Ø | LOAD FROM ARRAY CELLS |
| I | I | LOAD FROM ARY BUS DOUBLE SHIFT |

109

17

FIG.5

| SEL1 | SEL0 | INPUT STAGE |
|------|------|-------------|
| 0 | 0 | D0 |
| 0 | 1 | D1 |
| 1 | 0 | D2 |
| 1 | 1 | D3 |

| SEL3 | SEL2 | FUNCTION |
|------|------|----------|
| 0 | 0 | SHIFT, LOAD FROM ARRAY BUS |
| 0 | 1 | LOAD FROM ARRAY CELLS |
| 1 | 0 | HOLD DATA |
| 1 | 1 | NO·OPERATION |

FIG.6

| SEL1 | SEL∅ | OUTPUT STAGE |
|---|---|---|
| ∅ | ∅ | D3 |
| ∅ | 1 | D2 |
| 1 | ∅ | D1 |
| 1 | 1 | D∅ |